(19) Europäisches Patentamt / European Patent Office / Office européen des brevets

(11) **EP 2 691 789 B1**

(12) **FASCICULE DE BREVET EUROPEEN**

(45) Date de publication et mention de la délivrance du brevet:
**18.01.2017 Bulletin 2017/03**

(21) Numéro de dépôt: **12710756.3**

(22) Date de dépôt: **28.03.2012**

(51) Int Cl.:
*G01S 19/13* (2010.01)    *G01S 19/21* (2010.01)
*G07B 15/06* (2011.01)

(86) Numéro de dépôt international:
**PCT/EP2012/055526**

(87) Numéro de publication internationale:
**WO 2012/130889 (04.10.2012 Gazette 2012/40)**

(54) **SYSTEME DE POSITIONNEMENT AVEC MECANISME DE DETECTION DE FRAUDE POUR APPLICATION CRITIQUE**

POSITIONIERUNGSSYSTEM MIT BETRUGSERKENNUNGSMECHANISMUS FÜR EINE KRITISCHE ANWENDUNG

POSITIONING SYSTEM WITH FRAUD DETECTION MECHANISM FOR A CRITICAL APPLICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2011 FR 1100961**

(43) Date de publication de la demande:
**05.02.2014 Bulletin 2014/06**

(73) Titulaire: **THALES**
**92400 Courbevoie (FR)**

(72) Inventeur: **BARDOUT, Yves**
**F-31400 Toulouse (FR)**

(74) Mandataire: **Delaval, Guillaume Laurent**
**Marks & Clerk France**
**Immeuble Visium**
**22, avenue Aristide Briand**
**94117 Arcueil Cedex (FR)**

(56) Documents cités:
**US-A1- 2008 316 042    US-A1- 2010 076 878**
**US-A1- 2010 287 038**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un système de positionnement avec mécanisme de détection de fraude pour application critique et s'applique notamment aux domaines des systèmes de navigation par satellites.

Les terminaux électroniques mobiles mettant en oeuvre des applications requérant des informations sur leur positionnement géographique comportent des moyens pour estimer le plus précisément possible leur position. Pour cela, des systèmes de géo-localisation par satellites sont communément utilisés, ces systèmes étant désignés par l'acronyme GNSS venant de l'expression anglo-saxonne « Global Navigation Satellite Systems ». Un exemple de système GNSS est le système GPS, acronyme venant de l'expression anglo-saxonne « Global Positionning System ».

Il est nécessaire que ces estimations de positions soient intègres et précises pour des applications critiques de positionnement. Une application critique de positionnement désigne une application pour laquelle les estimations de positions doivent présenter une grande fiabilité. C'est le cas, par exemple, des systèmes de paiement à l'usage pour l'assurance, les parking et les réseaux routiers notamment ainsi que des systèmes électronique judiciaires comme le bracelet électronique ou les équipements pour la filatures de suspects par la police. En outre, des applications de suivi de marchandise comme des containers ou des applications d'assistance à la conduite sont également considérées comme des applications critiques de positionnement.

Les terminaux utilisés dans des systèmes mettant en oeuvre des applications critiques de positionnement sont habituellement inviolables et utilisent des moyens de communication sécurisés. Ces terminaux sont aussi appelés équipement embarqués et désignés par l'acronyme OBU venant de l'expression anglo-saxonne « Onboard Unit ».

Cependant, le lien radio entre le terminal et les satellites appartenant au système GNSS est habituellement mis en oeuvre à l'aide d'un signal non protégé et est accessible à tous. Il est par conséquent possible pour un utilisateur malintentionné de perturber le fonctionnement normal du terminal afin que celui-ci acquière des estimations faussées de sa position. Ces estimations faussées sont habituellement transmises par radio à des serveurs de traitement dont le fonctionnement est alors également faussé. Ce type de fraude est possible sans même que l'utilisateur pirate ne modifie le terminal OBU. Pour cela, un équipement à bas coût peut être utilisé, par exemple un équipement pouvant recevoir des signaux GNSS et les retransmettre après les avoir modifiés. Le signal retransmis et modifié se substitue au signal réel provenance des satellites du système GNSS et le terminal estime une position erronée.

Dans le cas d'un système mettant en oeuvre une application de paiement, le déclanchement d'un paiement est lié à des évènements de tarification déclenché par le passage du terminal OBU au travers de portes virtuelles ou à l'entrée/sortie d'une zone géographique. Dans ce cas, l'équipement utilisé pour la fraude peut-être conçu pour neutraliser des points de tarification tout en apparaissant conforme lors de points de contrôle et minimiser ces écarts par rapport aux trajectoires réelles pour éviter la détection.

Des méthodes existantes permettent de vérifier le fonctionnement des terminaux OBU. Cette vérification est faite de manière statistique sur des points de contrôle fixes ou mobiles. Une autre manière de faire est de vérifier a posteriori la cohérence des évènements de tarification, par exemple en croisant les évènements de tarification avec les immatriculations des véhicules observés dans les zones de tarification. Cependant, un équipement de fraude peut être conçu pour être silencieux lors des contrôles, la position des zones de contrôle pouvant être publiée par un service centralisé sur le modèle des équipements anti radars de contrôle de vitesse.

Différentes méthodes de contrôle de la cohérence des estimations de position existent. Cette cohérence peut être vérifiée en surveillant la puissance absolue ou relative des signaux GNSS ou en surveillant la puissance du signal pour chaque satellite.

La cohérence des mesures peut également être vérifiée en utilisant des techniques de tatouage numérique permettant notamment aux terminaux de localiser les émetteurs d'un réseau. Cette technique est souvent désignée par le mot anglais « watermarking ». Un exemple de mise en oeuvre du tatouage numérique est divulgué dans la demande de brevet WO 2009/037133.

US2010/0287038 divulgue un système de positionnement comprenant au moins un récepteur satellite GNSS ainsi que des moyens de détections pour déterminer si les positions estimées par le récepteur GPS sont falsifiées basées sur une comparaison des mesures GNSS avec celles d'autres capteurs embarqués sur un véhicule.

Un grand nombre de terminaux OBU déjà déployés et en fonctionnement n'incluent pas de tels techniques permettant de vérifier la cohérence des estimations de positions. Pour mettre à niveau ces récepteurs, c'est-à-dire pour y inclure des fonctionnalités leurs permettant de vérifier la cohérence des mesures, il faudrait intervenir sur chaque récepteur ce qui induirait des coûts importants de main d'oeuvre.

En outre, ces techniques ne permettent pas de garantir l'intégrité des estimations. Des attaques sophistiquées peuvent les contourner au moins partiellement. Par exemple, une trajectoire peut être modifiée avec un faible écart de giration par rapport à la trajectoire réelle pour contrer par exemple la vérification de la cohérence avec des données provenant d'un capteur inertiel embarqué dans le véhicule.

Un but de l'invention est notamment de pallier les inconvénients précités.

A cet effet, l'invention a pour objet un système de positionnement selon les revendications 1 à 6.

D'autres caractéristiques et avantages de l'invention apparaîtront à l'aide de la description qui suit donnée à titre illustratif et non limitatif, faite en regard des dessins annexés parmi lesquels :

- la figure 1 illustre de manière simplifiée le système de positionnement selon l'invention ;
- la figure 2 donne un exemple d'application d'un critère de cohérence se basant sur un filtre cartographique ;
- la figure 3 illustre le principe d'un indicateur de cohérence se basant sur l'analyse des signaux reçus par un récepteur GNSS.

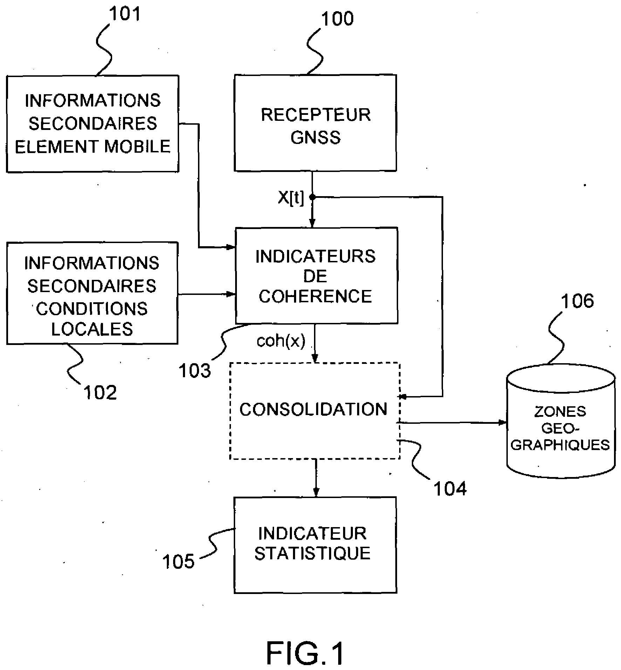

Le système décrit à l'aide de la figure 1 comprend un terminal OBU dans lequel un récepteur GNSS 100 a pour fonction l'estimation de la position d'un élément mobile sur lequel le terminal est embarqué. L'élément mobile correspond par exemple à une personne, un animal, un véhicule ou un objet quelconque. Le système comprend aussi des sources d'informations secondaires. Ces informations secondaires sont de deux types. Le premier type d'informations secondaires est relatif à l'élément mobile localisé 101. Le second type d'informations secondaires est relatif aux conditions locales 102 dans lequel se trouve le terminal OBU. Le système comprend en outre des moyens pour vérifier la fiabilité de la position estimée 103, 104, 105.

L'ensemble des composants du système peuvent être implémentés dans le terminal OBU. De manière alternative, le récepteur GNSS 100 ainsi que la source d'informations secondaires relatives à l'élément mobile 101 peuvent être implémentés dans le terminal, et le reste des composants 102, 103, 105 peut être mis en oeuvre dans des infrastructures fixes. A titre d'exemple, les systèmes de péage routier s'appuient habituellement sur une infrastructure fixe d'un réseau de télécommunications.

La trajectoire X de l'élément mobile sur lequel est embarqué le terminal 100 est composée d'une suite de position X[t] estimées à des instants t et est associées à une incertitude en position $\Delta X$ et à une incertitude temporelle $\Delta t$.

Les données fournies par les sources d'informations secondaires 101, 102 sont indépendantes du récepteur GNSS 100, mais elles dépendent aussi de la position absolue ou d'un changement de position dudit récepteur 100. Des exemples de sources de données secondaires relatives à l'élément mobile 101 sont :

- des capteurs inertiels ou odomètres fournissant des données de position relative de l'élément mobile ;
- un modèle mécanique de l'élément mobile indiquant des plages. de paramètres dynamiques pour la vitesse, l'accélération et/ou la giration de l'élément mobile.

D'autre part, des exemples de sources de données secondaires relatives aux conditions locales 102 sont :

- une base de données cartographiques fournissant des indications sur les routes, par exemple leurs types, leurs largeurs, leurs virages ainsi que des indications sur l'environnement voisin desdites routes ;
- un almanach de la ou des constellations des satellites du système GNSS utilisé.

Un module de traitement 103 dérive un indicateur de cohérence noté coh(X) en combinant les informations de positionnement fournies par le récepteur GNSS 100 avec les données fournies par les sources d'informations secondaires 101, 102.

Des moyens de détection 105 déterminent ensuite un indicateur statistique A(X) permettant de décider si la position X[t] estimée à l'instant t est authentique. Cet indicateur correspond à une représentation numérique d'une confiance dans la position.

Un exemple d'indicateur statistique A(X) est donné par l'expression suivante :

$$A(X) = 1 \text{ si coh}(X) > k \text{ et } A(X) = 0 \text{ si coh}(X) \leq k$$

L'indicateur vaut 1 lorsque la position estimée X[t] est considérée suffisamment fiable et 0 si celle-ci est considérée falsifiée. K est une valeur réelle positive ou nulle correspondant à un seuil de décision.

Un autre exemple d'indicateur A(X) correspond à une probabilité de falsification ou un couple possibilité/nécessité suivant la logique floue de Zadeh. On a alors A(X) = 1-p(X) et il se base alors sur une probabilité de falsification p(X). Cette probabilité de falsification est donnée par l'expression suivante :

$$p(X) = f(coh(X))$$

dans laquelle f est une fonction de [0; ∞[ vers [0; 1]. A titre d'exemple, la fonction f est donnée par l'expression suivante :

$$f(coh(X)) = (2/\pi) \times arctan( \alpha \times coh(X)^n)$$

dans laquelle les facteurs réels $\alpha > 0$ et $n > 0$ permettent le réglage de la décision ;

$\alpha$ est défini comme l'inverse de la valeur de coh(X) correspondant à une probabilité de confiance de ½ ;

n est un nombre réel positif permettant de régler la « rampe » de la fonction f.

Comme explicité précédemment, cet indicateur de confiance A(X) est obtenu à partir d'un indicateur de cohérence coh(X) ou d'une combinaison d'indicateurs de cohérence. Des exemples d'indicateurs de cohérence sont décrits dans la suite de la description.

L'indicateur ou les indicateurs de cohérence correspondent à une probabilité d'authenticité de la position estimée. Cependant, la mesure d'un indicateur de cohérence en chaque position estimée X[t] n'est pas suffisante pour prouver qu'il y a fraude. Comme toute décision basée sur des mesures, le résultat de la détection peut présenter des faux positifs, c'est-à-dire que des positions reportées peuvent être détectées comme falsifiées alors qu'elles ne le sont pas en réalité. L'impact des faux positifs peut être important dans le cas d'un taux faible de falsification, ce qui est la situation habituelle. De la même manière, des faux négatifs peuvent apparaitre, c'est-à-dire qu'une mesure falsifiée est considérée par le système comme une mesure fiable.

Pour renforcer la fiabilité de la détection de fraude, le système selon l'invention comprend un module de consolidation 104. Le module de consolidation 104 met en oeuvre des méthodes d'inférence statistique bayesienne, de filtrage ou toute autre calcul visant à assurer une confiance suffisante au résultat de l'authentification des positions estimées. Pour cela, un ensemble de positions estimées X[t] et d'indicateurs de cohérence coh(X) associés auxdites positions est examiné. Le but est de diminuer le taux de faux positifs et de faux négatifs en déterminant une probabilité d'authenticité ou de falsification avec une marge de sécurité prédéterminée.

Pour cela, les positions X[t] ainsi que les indicateurs coh(X) sont mémorisés dans une base de donnée comprise dans le système, et ce pour tout les terminaux du système. Ces données sont ensuite regroupées dans des sous-ensembles statistiques. La validation de position comprend un ou plusieurs tests d'hypothèses basés sur ces données sous-ensembles statistiques.

La distribution des erreurs dans le temps ainsi que les coordonnées géographiques des zones payantes et non payantes permet de distinguer un fonctionnement défaillant d'un terminal d'une volonté délibérée de fraude. Il est alors possible de déclencher une notification d'incident de fraude ou de disfonctionnement.

Dans un mode de réalisation préféré, un vecteur comportant les estimations de positions Xu[t] pour un utilisateur u donné est utilisé en entrée d'un filtre numérique. A titre d'exemple, la fonction de consolidation mise en oeuvre par le filtre numérique intègre un ensemble de positions estimées Xu[t] sur tout ou partie d'un trajet, réduisant ainsi la dispersion de l'indicateur. En d'autres termes, les positions estimées Xu pour un utilisateur u donné sont moyennées sur un intervalle de temps prédéfini.

La fréquence des suspicions de falsification pour un utilisateur u donné est mémorisée dans un historique des suspicions 106.

La fréquence de suspicion de falsification pour des zones géographiques choisies peut être également mémorisée 106 afin de pouvoir éviter un effet local. En effet, dans des zones géographiques données peuvent apparaître des taux de faux positifs et de faux négatifs élevés, par exemple du fait de conditions de propagation radio dégradées.

Le module de consolidation 104 peut également effectuer une corrélation entre les positions estimées suspectes et une base de données de tarification comprenant les coordonnées géographiques des zones de tarification et ainsi mieux caractériser une fraude intentionnelle. Cela permet de tenir compte du fait que les falsifications se produisent habituellement à proximité ou dans les zones de tarifications. Ce critère de coïncidence avec les zones de tarification permet de discriminer les trajectoires erronées visant à éviter le passage d'une porte virtuelle.

Dans un mode de réalisation préféré, le système comprend un mécanisme de mise à jour logicielle. Ainsi, les composants du système peuvent être mis à jour périodiquement ou suivant le besoin des données et des programmes utilisés par le système. Cela peut être mis en oeuvre pour tout type d'équipement du système, qu'ils soient distribués dans l'infrastructure fixe du réseau ou bien embarqués. L'objectif de ces mises à jour est d'améliorer l'efficacité du système en suivant l'évolution des méthodes de falsification.

Comme décrit précédemment, le fonctionnement du système requière la détermination d'indicateurs de cohérence. Plusieurs exemples d'indicateurs de cohérence coh(X) sont décrits ci-après.

L'indicateur de cohérence coh(X) selon l'invention se base sur l'estimation de la cohérence des positions estimées par rapport à un modèle dynamique de déplacement d'un véhicule à positionner. Un modèle dynamique de déplacement de l'élément mobile à positionner permet de définir des valeurs maximum ou une plage d'estimations cohérentes dans l'espace des mesures de vitesse, d'accélération et de giration dans le plan.

Pour des éléments mobiles correspondant à un véhicule motorisé, un indicateur de cohérence peut être calculé en comparant la vitesse et la direction du récepteur par rapport à ce modèle. Pour cela, les ratios suivants peuvent être calculés :

- ratio de la vitesse v à la vitesse maximale possible sur la trajectoire
- ratio de l'accélération a à l'accélération maximale possible sur la trajectoire
- ratio de la giration g à la giration maximale possible sur la trajectoire
- inclusion du triplet [v, a, g] dans le domaine mécanique de l'élément mobile considéré. ce domaine est limité par un graphe dans le repère [v, a, g] dont les bornes sont les maximum absolus de vitesse, d'accélération, et de giration.

Pour des éléments mobiles correspondants à des objets, des personnes ou des animaux, les mêmes principes peuvent être appliqués en définissant les domaines autorisés à partir des connaissances acquises sur la mobilité de l'objet, les possibilités de l'espèce animale ou de la personne en tenant compte de la possibilité pour cet objet, cette personne ou cet animal de monter à bord d'un véhicule. Par exemple, du fait qu'il ne puisse par être monté dans une voiture de course, un objet de type container peut-être associé à un domaine dynamique réduit.

En d'autre terme, la mise en oeuvre de cet indicateur de cohérence se basant sur un modèle de déplacement dynamique revient à associer un modèle dynamique à l'élément mobile suivi et de comparer les trajectoires estimées aux limites de ce modèle.

En prenant l'exemple d'un modèle dynamique se basant sur une conduite routière, si l'utilisateur emprunte une autoroute alors qu'il prétend utiliser une route secondaire, la falsification pourra être détectée car sa vitesse dépassera les bornes de la plage de vitesses autorisée sur route secondaire. En utilisant le même indicateur de cohérence, une déformation erronée de la trajectoire ou la présence de sauts visant à éviter des évènements de tarification ou d'alertes peuvent être détectés.

Il est en outre à noter qu'à moins que toutes les positions soient en permanence falsifiées, la trajectoire va raccorder un point de départ à un point d'arrivée en un temps donné correspondant à des positions réelles. Ainsi la distance parcourue estimée dans cet intervalle de temps sera différente par rapport à la distance réellement parcourue. De plus, les conditions de routes sont très différentes entre une route secondaire et une autoroute.

Un deuxième exemple d'indicateur de cohérence coh(X) se base sur l'utilisation d'un filtre cartographique. La technique du filtre cartographique est habituellement désignée par l'expression anglo-saxonne « map-matching ». Elle est utilisée pour améliorer la précision de l'estimation de position d'un élément mobile en se basant sur des données issues de cartes. Ces données permettent de déterminer une position corrigée Xc[t] à partir d'une position X[t] estimée par le récepteur GNSS. Des techniques connues permettant d'obtenir Xc[t] à partir de X[t] sont par exemple la projection orthogonale de la position estimée X[t] sur le route la plus proche ou le calcul d'une distance minimale entre la position estimée X[t] et plusieurs routes possibles.

Un indicateur de cohérence s'appuyant sur cette technique peut être utilisé dans le cadre de l'invention. L'indicateur de cohérence peut être défini comme une métrique représentative de l'écart entre la position estimée X[t] et la position corrigée Xc[t]. L'indicateur de cohérence coh(X) correspond par exemple à la distance d(X,Xc) pouvant être la distance euclidienne, quadratique, géodésique ou curviligne entre X et Xc.

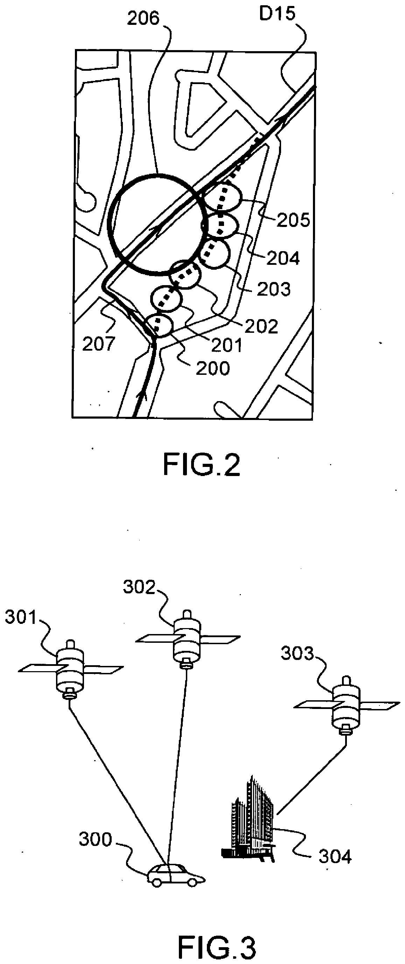

La figure 2 donne un exemple d'application d'un critère de cohérence coh(X) se basant sur un filtre cartographique pour un système de péage routier. Les positions 200, 201, 202, 203, 204, 206 reportées par le terminal embarqué sont falsifiées en vue d'éviter une porte virtuelle 206 traversée si la trajectoire réelle 207 est prise en compte par le système. Dans ce cas, l'indicateur de cohérence coh(X) se basant sur un filtre cartographique permet de détecter que celles-ci sont trop éloignées de position pertinentes comprises sur un segment routier, ce segment routier correspondant par exemple à la route départementale D15. Par exemple, coh(X)∈[0.7 ; 1] si les positions estimées sont cohérentes avec les positions pertinentes et coh(X)∈[0 ; 0.7[ si les positions estimées sont incohérentes avec les positions pertinentes.

Un troisième exemple d'indicateur de cohérence coh(X) se base sur l'analyse des signaux reçus par le récepteur GNSS. Cette indicateur est appelé indicateur de cohérence de réception dans la suite de la description. Il a pour objectif de détecter les événements suivants :

- affaiblissement des signaux satellites ;
- perte de position ;
- différence de visibilité des satellites par rapport à la visibilité attendue.

La figure 3 illustre le principe d'un indicateur de cohérence coh(X) se basant sur l'analyse des signaux reçus par un récepteur GNSS. La visibilité des satellites d'une constellation GNSS par le terminal dépend de l'environnement physique, c'est-à-dire de la végétation, des constructions autour du récepteur et du relief. Dans l'exemple de la figure, le terminal est embarqué dans un véhicule 300. Son récepteur GNSS est potentiellement en visibilité directe avec 3 satellites 301, 302, 303. Cependant, des bâtiments 304 empêchent le terminal de recevoir le signal en provenance de l'un des trois satellites.

Les données habituellement fournies en sortie d'un récepteur GNSS comprennent en plus de la position estimée X la liste des satellites suivis, c'est-à-dire la liste des satellites sur lequel le récepteur est synchronisé. Il est donc possible de vérifier la cohérence entre cette liste de satellites et la visibilité des satellites à la position estimée X à l'instant t d'estimation. Par exemple, une incohérence est détectée lorsque le récepteur indique qu'il est accroché au signal d'un satellite alors que ce satellite est masqué par un immeuble. Lorsque le nombre de satellites suivis est inférieur au nombre de canaux du récepteur et que le récepteur devrait suivre d'autres satellites car ceux-ci sont visibles, une incohérence est également détectée.

Cet indicateur n'est pas très utile lorsque le véhicule se déplace sur autoroute ou sur une route dégagée. Par contre, dans le cas d'une trajectoire falsifiée lorsque le véhicule traverse une zone urbaine, l'ensemble de satellites visibles constitue une signature de la position réelle. Cette signature équivaut à un fort indice de confiance.

Diverses données peuvent être utilisées afin d'estimer la probabilité de cohérence de la visibilité des satellites sur lequel le récepteur se base pour l'estimation de position. Ainsi, on peut utiliser les extrémités du segment routier sur lequel le récepteur se situe et la largeur de ce segment. Des informations comme la hauteur $H_b$ des obstacles empêchant la visibilité directe d'un satellite et l'empreinte au sol, c'est-à-dire la distance à l'axe routier, peuvent être utilisées. Ce type d'informations peut être estimé avec à partir d'une ou plusieurs sources parmi lesquelles :

- un modèle tridimensionnel des lieux traversés par le véhicule ;
- des photographies de rues ;
- des photographies aériennes ou par satellite permettant la reconnaissance du type de bâti ou de végétation ;
- des réglementations d'urbanisme, permettant notamment de déterminer la hauteur maximum Hmax des bâtiments d'une zone donnée ;
- des données représentatives de la densité de population afin par exemple de déduire un nombre moyen de logements et donc d'étages par bâtiment ;
- une cartographie de la végétation ;
- un modèle de croissance saisonnier, dont on peut déduire la densité et la hauteur de feuillage des végétaux du lieu dans lequel le véhicule évolue, une fonction d'atténuation radio due à la végétation pouvant ainsi être déterminée.

**Revendications**

1. Système de positionnement comprenant

    - au moins un récepteur satellite GNSS (100) embarqué dans un élément mobile appartenant à un utilisateur u, ledit récepteur ayant pour fonction l'estimation de la position Xu dudit élément mobile à différents instants,
    - un premier module de traitement (103) déterminant un indicateur de cohérence coh(X) en combinant les positions estimées Xu[t] et des données fournies par des sources d'informations secondaires (101, 102),
    - le système comprenant un module de consolidation (104) comportant des moyens pour mémoriser les positions Xu[t] estimées à différents instants t par utilisateur u, un filtre numérique permettant d'obtenir une position filtrée Xf[t] à partir des positions Xu[t] mémorisées d'un utilisateur, ledit filtre numérique étant adapté pour moyenner les positions estimées Xu[t] pour un utilisateur u donné sur un intervalle de temps prédéfini,
    - le système comporte en outre des moyens de détections (105) pour déterminer à partir de l'indicateur de cohérence coh(X) si les positions estimées Xu(t) sont falsifiées ou non,

    **caracterisé en ce que** l'indicateur est déterminé en comparant un triplet vitesse, accélération, giration [v, a, g] dérivé de mesures de direction et de vélocité réalisées par l'élément mobile à un modèle dynamique de déplacement d'un objet, véhicule, personne ou animal à positionner, ledit modèle définissant des valeurs maximum ou une plage d'estimations cohérentes dans l'espace des mesures de vitesse, d'accélération et de giration.

2. Système de positionnement selon la revendication 1 dans lequel le filtre numérique intègre un ensemble de positions estimées Xu[t] sur tout ou partie d'un trajet

3. Système de positionnement selon l'une quelconque des revendications précédentes dans lequel la fréquence des falsifications pour un utilisateur u donné est calculée et mémorisée dans une base de données (106).

4. Système de positionnement selon l'une quelconque des revendications précédentes dans lequel la fréquence des falsifications pour des zones géographiques choisies est déterminée et mémorisée dans une base de données (106).

5. Système de positionnement selon l'une quelconque des revendications précédentes dans lequel les positions estimées sont utilisées pour la mise en oeuvre de péages routiers.

6. Système de positionnement selon la revendication 5 dans lequel le module de consolidation (104) effectue une corrélation entre les positions estimées considérées suspectes et une base de données de tarification comprenant les coordonnées géographiques des zones de tarification de manière à identifier les trajectoires erronées visant à éviter le passage d'une porte virtuelle d'une zone de tarification.

## Patentansprüche

1. Positionierungssystem, beinhaltend:

mindestens einen in einem einem Benutzer "u" gehörenden beweglichen Element installierten Bord-Satellitenempfänger GNSS (100), wobei der Empfänger dazu dient, die Position "Xu" des beweglichen Elements zu unterschiedlichen Zeitpunkten zu schätzen,
ein erstes Verarbeitungsmodul (103), das einen Kohärenzindikator coh(X) ermittelt, indem es die geschätzten Positionen Xu[t] und von sekundären Informationsquellen (101, 102) gelieferte Daten kombiniert,
wobei das System ein Konsolidierungsmodul (104) enthält mit Mitteln zur Speicherung der zu unterschiedlichen Zeitpunkten t geschätzten Positionen Xu[t] pro Benutzer "u", einem digitalen Filter zur Erzielung einer gefilterten Position Xf[t] anhand der gespeicherten Positionen Xu[t] eines Benutzers, wobei der digitale Filter zur Mittelung der geschätzten Positionen Xu[t] eines gegebenen Benutzers "u" über einen vordefinierten Zeitraum geeignet ist, wobei das System zudem Erkennungsmittel (105) beinhaltet zur Ermittlung, anhand des Kohärenzindikators coh(X), ob die geschätzten Positionen Xu(t) falsifiziert sind oder nicht,
**dadurch gekennzeichnet, dass** der Indikator durch Vergleich eines Wertetripels aus Geschwindigkeit, Beschleunigung und Drehung [v, a, g] ermittelt wird, das aus durch das bewegliche Element vorgenommenen Richtungs- und Geschwindigkeitsmessungen abgeleitet wird, mit einem dynamischen Bewegungsmodell eines zu positionierenden Objekts, Fahrzeugs bzw. einer zu positionierenden Person oder eines zu positionierenden Tiers, wobei das Modell kohärente Höchstwerte oder einen kohärenten Schätzbereich im Bereich der Geschwindigkeits-, Beschleunigungs- und Drehmessungen definiert.

2. Positionierungssystem nach Anspruch 1, bei dem der digitale Filter eine Reihe von geschätzten Positionen Xu[t] über einen gesamten Weg oder einen Teil eines Weges integriert.

3. Positionierungssystem nach einem der vorhergehenden Ansprüche, bei dem die Falsifizierungsfrequenz für einen gegebenen Benutzer "u" berechnet und in einer Datenbank (106) gespeichert wird.

4. Positionierungssystem nach einem der vorhergehenden Ansprüche, bei dem die Falsifizierungsfrequenz für ausgewählte geografische Zonen ermittelt und in einer Datenbank (106) gespeichert wird.

5. Positionierungssystem nach einem der vorhergehenden Ansprüche, bei dem die geschätzten Positionen zur Umsetzung von Straßenmautsystemen verwendet werden.

6. Positionierungssystem nach Anspruch 5, bei dem der Konsolidierungsmodul (104) eine Korrelation zwischen den als verdächtig betrachteten geschätzten Positionen und einer Tarifierungsdatenbank herstellt, die geografische Koordinaten von Tarifierungszonen enthält, um fehlerhafte Strecken zu erkennen und die Durchquerung eines virtuellen Tors einer Tarifierungszone zu vermeiden.

## Claims

1. A positioning system comprising

- at least one onboard GNSS satellite receiver (100) in a mobile element belonging to a user u, said receiver having the function of estimating the position Xu of said mobile element at different instants,
- a first processing module (103) determining a consistency indicator coh(X) by combining the estimated positions Xu[t] and data provided by secondary information sources (101, 102),
- the system comprising a consolidation module (104) containing means for storing the positions Xu[t] estimated at different instants t by the user u, a digital filter making it possible to obtain a filtered position Xf[t] from the stored positions Xu[t] of a user, said digital filter being adapted to average the estimated positions Xu[t] for a given user u over a pre-defined interval of time,

- the system further containing detection means (105) for determining from the consistency indicator coh(X) whether or not the estimated positions Xu(t) are falsified, **characterised in that** the indicator is determined by comparing a speed, acceleration, gyration [s, a, g] triplet derived from direction and velocity measurements taken by the mobile element to a dynamic model of movement of an object, vehicle, person or animal to be positioned, said model defining maximum values or a range of coherent estimations within the space of the speed, acceleration and gyration measurements.

2. The positioning system according to Claim 1, wherein the digital filter integrates a set of estimated positions Xu[t] over all or part of a journey.

3. The positioning system according to any of the preceding claims, wherein the frequency of falsifications for a given user u is calculated and stored in a database (106).

4. The positioning system according to any of the preceding claims, wherein the frequency of falsifications for chosen geographic zones is determined and stored in a database (106).

5. The positioning system according to any of the preceding claims, wherein the estimated positions are used for the implementation of road tolls.

6. The positioning system according to Claim 5, wherein the consolidation module (104) performs a correlation between the estimated positions considered as suspicious and a pricing database comprising the geographical coordinates of the pricing zones such as to identify the erroneous trajectories aiming to avoid passing through a virtual door of a pricing zone.

101

100

INFORMATIONS
SECONDAIRES
ELEMENT MOBILE

RECEPTEUR
GNSS

X[t]

INFORMATIONS
SECONDAIRES
CONDITIONS
LOCALES

INDICATEURS
DE
COHERENCE

106

103

coh(x)

CONSOLIDATION

ZONES
GEO-
GRAPHIQUES

102

104

INDICATEUR
STATISTIQUE

105

FIG.1

206　　　　　　　　D15

205

204

203

202

207　　　　　201

200

## FIG.2

302

301

303

300

304

## FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009037133 A
- US 20100287038 A